# EUROPEAN PATENT APPLICATION

(11) **EP 4 628 660 A1**
(43) Date of publication of application: **08.10.2025**
(21) Application number: 24753143.7
(22) Date of filing: 25.01.2024
(51) Int. Cl.: E02F 9/22, F16H 59/18, F16H 59/40, F16H 61/688

(54) **WORK MACHINE**

(30) Priority: 09.02.2023 JP 2023018102
(71) Applicant: Komatsu Ltd., Tokyo 105-8316 (JP)
(72) Inventor: KAMEKURA, Hirotaka, Tokyo 105-8316 (JP); IKARI, Masanori, Tokyo 105-8316 (JP)
(74) Representative: Flügel Preissner Schober Seidel
(86) International application number: PCT/JP2024/002244
(87) International publication number: WO 2024/166699

(57) **Abstract**

A work machine includes a first motor, a second motor, a travel body, a transmission, and a controller. The transmission includes an output shaft, a main transmission path, a first transmission path, a second transmission path, a first clutch, and a second clutch. An output shaft is connected to the travel body. The main transmission path connects the first motor to the output shaft. The first transmission path is connected to the second motor and has a first reduction ratio. The second transmission path is connected to the second motor and has a second reduction ratio lower than the first reduction ratio. The first clutch is connected to the first transmission path and the main transmission path. The second clutch is connected to the second transmission path and the main transmission path. In a first travel mode, the controller engages the first clutch and releases the second clutch. In a second travel mode, the controller engages the second clutch and releases the first clutch.

## Description

### Technical Field

The present invention relates to a work machine.

### Background Art

Some work machines include a plurality of motors for causing work machines to travel. For example, the work machine of Patent Document 1 includes a first hydraulic motor and a second hydraulic motor. When the vehicle speed is in a low speed range, the work machine travels by both the first hydraulic motor and the second hydraulic motor. When the vehicle speed is in a high speed range, the work machine travels only by the second hydraulic motor.

### Citation List

### Patent Literature

Patent Document 1: JP 11-230333 A

### Summary of Invention

### Technical Problem

In the work machine as described above, rotation from the first hydraulic motor is reduced at a higher reduction ratio than that in the second hydraulic motor. Therefore, in the low speed range, use of both the first hydraulic motor and the second hydraulic motor enables the work machine to obtain high traction force performance at the time of work. On the other hand, in the high speed range, the rotation speed of the first hydraulic motor exceeds a permissible rotation speed, and therefore the first hydraulic motor is not used, and only the second hydraulic motor reduced at a low deceleration ratio is used. This enables the work machine to obtain high maximum vehicle speed performance at the time of travel.

However, in the high speed range, the first hydraulic motor is not effectively used. Therefore, it is difficult to obtain high maximum vehicle speed performance at a time of travel requiring high traction force such as when climbing or on a bad road, for example. The present disclosure relates to a work machine generating high traction force at the time of high speed travel.

### Solution to Problem

A work machine according to one aspect of the present disclosure includes a first motor, a second motor, a travel body, a transmission, and a controller. The travel body causes the work machine to travel. The transmission includes an output shaft, a main transmission path, a first transmission path, a second transmission path, a first clutch, and a second clutch. An output shaft is connected to the travel body. The main transmission path connects the first motor to the output shaft. The first transmission path is connected to the second motor and has a first reduction ratio. The second transmission path is connected to the second motor and has a second reduction ratio lower than the first reduction ratio. The first clutch is connected to the first transmission path and the main transmission path. The second clutch is connected to the second transmission path and the main transmission path.

The controller switches a plurality of travel modes. The plurality of travel modes include a first travel mode and a second travel mode. In the first travel mode, the controller transmits the driving force of the second motor to the main transmission path via the first transmission path by engaging the first clutch and releasing the second clutch. In the second travel mode, the controller transmits the driving force of the second motor to the main transmission path via the second transmission path by engaging the second clutch and releasing the first clutch.

In the work machine according to the present aspect, in the first travel mode, the driving force of the first motor is transmitted to the output shaft via the main transmission path, and the driving force of the second motor is transmitted to the output shaft via the first transmission path and the main transmission path. Therefore, in the first travel mode, the work machine travels by the first motor and the second motor. In the first travel mode, the rotation speed from the second motor is reduced at the first reduction ratio that is higher than the second reduction ratio of the second transmission path. This enables the work machine to obtain high traction force performance.

In the second travel mode, the driving force of the first motor is transmitted to the output shaft via the main transmission path, and the driving force of the second motor is transmitted to the output shaft via the second transmission path and the main transmission path. Therefore, the rotation speed from the second motor is reduced at the second reduction ratio that is lower than the first reduction ratio of the first transmission path. Therefore, even when the work machine travels at a high speed, the rotation speed of the second motor is suppressed from exceeding the permissible rotation speed. Also in the second travel mode, the work machine travels by the first motor and the second motor. Therefore, high traction force performance can be obtained even at the time of high speed travel. As described above, the work machine according to the present aspect can generate high traction force at the time of high speed travel.

### Advantageous Effects of Invention

According to the present disclosure, the work machine can generate high traction force at the time of high speed travel.

### Brief Description of Drawings

FIG. 1 is a side view of a work machine according to an embodiment.
FIG. 2 is a block diagram illustrating a configuration of the work machine.
FIG. 3 is a schematic diagram illustrating a configuration of a transmission.
FIG. 4 is a table showing a state of each clutch in a plurality of travel modes.
FIG. 5 is a schematic diagram illustrating a transmission in a first travel mode.
FIG. 6 is a view illustrating traction force characteristics in a plurality of travel modes.
FIG. 7 is a schematic diagram illustrating a transmission in a second travel mode.
FIG. 8 is a schematic diagram illustrating a transmission in a third travel mode.
FIG. 9 is a block diagram illustrating a configuration of a work machine according to a first modification.
FIG. 10 is a block diagram illustrating a configuration of a work machine according to a second modification.

### Description of Embodiments

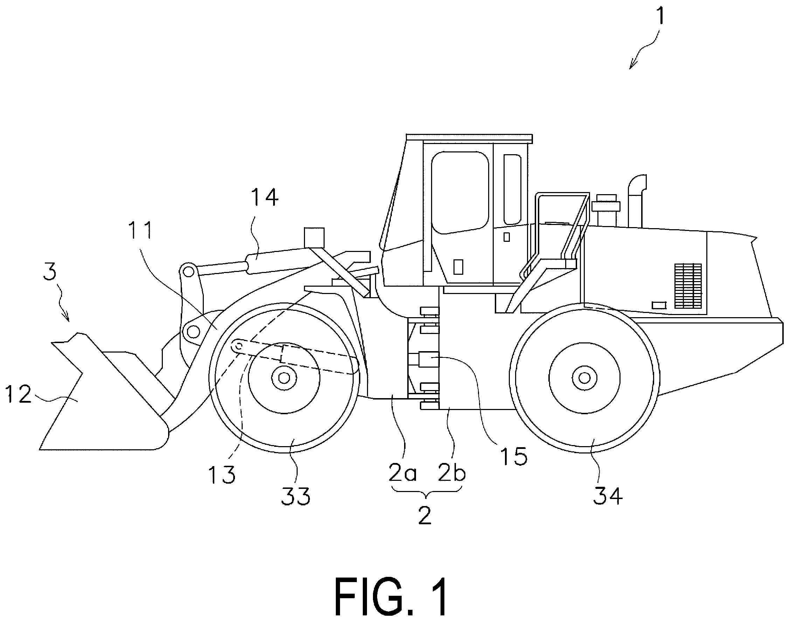

Hereinafter, an embodiment of the present disclosure will be described in detail with reference to the drawings. FIG. 1 is a side view of a work machine 1 according to the embodiment. In the present embodiment, the work machine 1 is a wheel loader. As illustrated in FIG. 1, the work machine 1 includes a vehicle body 2 and a work implement 3.

The vehicle body 2 includes a front vehicle body 2a and a rear vehicle body 2b. The rear vehicle body 2b is connected being turnable leftward and rightward relative to the front vehicle body 2a. A hydraulic cylinder 15 is coupled to the front vehicle body 2a and the rear vehicle body 2b. The hydraulic cylinder 15 extends and contracts, turning the front vehicle body 2a leftward and rightward relative to the rear vehicle body 2b.

The work implement 3 is used for work such as excavation, transportation, and soil removal. The work implement 3 is operably attached to the front vehicle body 2a. The work implement 3 includes a boom 11, a bucket 12, and hydraulic cylinders 13, 14. The boom 11 and the bucket 12 operate by extension and contraction of the hydraulic cylinders 13, 14.

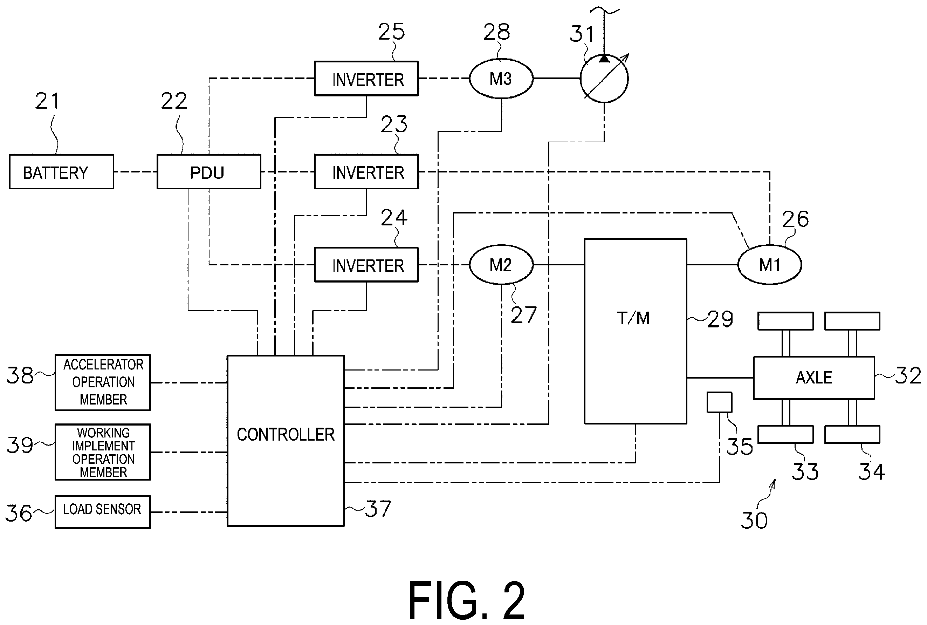

FIG. 2 is a block diagram illustrating a configuration of the work machine 1. As illustrated in FIG. 2, the work machine 1 includes a battery 21, a power distribution unit (hereinafter, PDU) 22, first to third inverters 23 to 25, first to third motors 26 to 28, a transmission 29, a travel body 30, and a work implement pump 31. The battery 21 is rechargeable and stores electric power. The battery 21 is electrically connected to the first to third motors 26 to 28 via the PDU 22 and the first to third inverters 23 to 25. The PDU 22 distributes the electric power of the battery 21 to the first to third motors 26 to 28. The first inverter 23 controls electric power to be distributed to the first motor 26. The second inverter 24 controls electric power to be distributed to the second motor 27. The third inverter 25 controls electric power to be distributed to the third motor 28.

The first motor 26 and the second motor 27 are mechanically connected to the travel body 30 via the transmission 29. The transmission 29 will be described in detail later. By being driven by the first motor 26 and the second motor 27, the travel body 30 causes the work machine 1 to travel. The travel body 30 includes an axle 32 and travel wheels 33 and 34. The axle 32 transmits driving force from the transmission 29 to the travel wheels 33 and 34.

The travel wheels 33 and 34 are rotatably supported by the vehicle body 2. The travel wheels 33 and 34 include a front wheel 33 and a rear wheel 34. As illustrated in FIG. 1, the front wheel 33 is supported by the front vehicle body 2a. The rear wheel 34 is supported by the rear vehicle body 2b. The travel wheels 33 and 34 have tires attached, for example. Alternatively, the travel wheels 33 and 34 may have continuous tracks attached. The work implement pump 31 is a hydraulic pump. The work implement pump 31 is driven by the third motor 28 and discharges hydraulic oil. The hydraulic oil discharged from the work implement pump 31 is supplied to the hydraulic cylinders 13 to 15 described above.

The first to third motors 26 to 28 are electric motors. Specifically, the first to third motors 26 to 28 are motor/generators. The first motor 26 and the second motor 27 function as motors by electric power from the battery 21 to drive the travel body 30. By this, the work machine 1 travels. The first motor 26 and the second motor 27 function as generators by regenerative force from the travel body 30 to generate electric power.

The third motor 28 functions as a motor by electric power from the battery 21 to drive the work implement pump 31. By this, the work implement 3 operates. The third motor 28 functions as a generator to generate electric power by regenerative force from the work implement pump 31. The battery 21 is charged with electric power generated by the first to third motors 26 to 28.

The work machine 1 includes a vehicle speed sensor 35. The vehicle speed sensor 35 detects an output rotation speed of the transmission 29. The output rotation speed of the transmission 29 corresponds to the vehicle speed of the work machine 1. However, the output rotation speed may be a rotation speed of another rotating element positioned in the transmission 29 or downstream of the transmission 29.

The work machine 1 includes a load sensor 36. The load sensor 36 detects load on the work machine 1. The load sensor 36 may include an IMU. The IMU detects an inclination angle of the work machine 1 as load on the work machine 1. The load sensor 36 may include a hydraulic pressure sensor. The hydraulic pressure sensor detects, as load on the work implement 3, hydraulic pressure of a hydraulic circuit for driving the work implement.

The work machine 1 includes a controller 37. The controller 37 includes a processor such as a central processing unit (CPU) and a storage device such as a RAM and a ROM. The controller 37 may include an auxiliary storage device such as a hard disc or a solid state drive (SSD). The controller 37 stores a program and data for controlling the work machine 1. The controller 37 executes processing for controlling the work machine 1 according to a stored program and data. The controller 37 receives a signal indicating the vehicle speed from the vehicle speed sensor 35. The controller 37 receives a signal indicating the load on the work machine 1 from the load sensor 36.

The controller 37 controls output of the first to third motors 26 to 28 by transmitting command signals to the PDU 22 and the inverters 23 to 25. The controller 37 controls the transmission 29 by transmitting a command signal to the transmission 29. The controller 37 controls the capacity of the work implement pump 31 by transmitting a command signal to the work implement pump 31. Note that the capacity of the work implement pump 31 is not limited to be electrically controlled by a command signal, and may be mechanically controlled.

The work machine 1 includes an accelerator operation member 38 and a work implement operation member 39. The accelerator operation member 38 can be operated by an operator in order to control the vehicle speed of the work machine 1. The accelerator operation member 38 is, for example, a pedal. However, the accelerator operation member 38 may be another member such as a lever or a switch. The work implement operation member 39 can be operated by the operator in order to control the work implement 3. The work implement operation member 39 is, for example, a lever. However, the work implement operation member 39 may be another member such as a switch or a pedal.

The controller 37 receives a signal indicating an accelerator operation amount from the accelerator operation member 38. The accelerator operation amount is an operation amount of the accelerator operation member 38. The controller 37 controls output of the first motor 26 and the second motor 27 according to the accelerator operation amount. By this, the vehicle speed of the work machine 1 is controlled according to the accelerator operation amount.

The controller 37 receives a signal indicating a work implement operation amount from the work implement operation member 39. The work implement operation amount is an operation amount of the work implement operation member 39. The controller 37 controls hydraulic oil supplied from the work implement pump 31 to the hydraulic cylinders 13 to 15 according to the work implement operation amount. By this, operation of the work implement 3 is controlled.

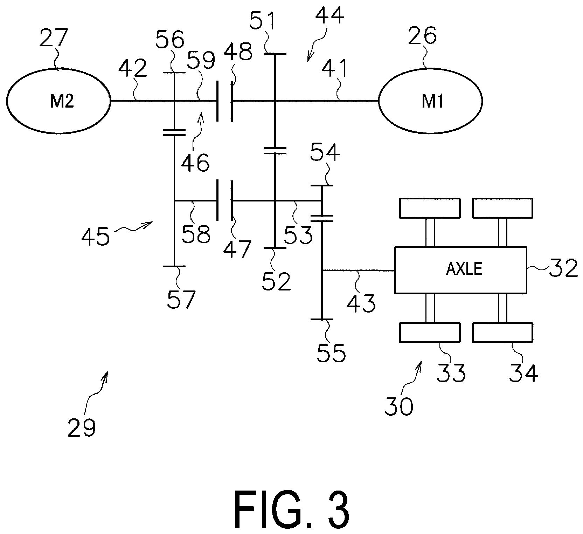

Next, a configuration of the transmission 29 will be described in detail. FIG. 3 is a schematic diagram illustrating the configuration of the transmission 29. As illustrated in FIG. 3, the transmission 29 includes a first input shaft 41, a second input shaft 42, an output shaft 43, a main transmission path 44, a first transmission path 45, a second transmission path 46, a first clutch 47, and a second clutch 48.

The first input shaft 41 is connected to the first motor 26. The second input shaft 42 is connected to the second motor 27. The output shaft 43 is connected to the travel body 30. The main transmission path 44 is connected to the first motor 26 and the output shaft 43. The first transmission path 45 is connected to the second motor 27 and has a first reduction ratio. The second transmission path 46 includes a gear not illustrated connected to the second motor 27 and having a second reduction ratio lower than the first reduction ratio. The second reduction ratio is set such that, for example, the rotation speed from the second motor 27 matches the rotation speed from the first motor 26 at the time of output from the second transmission path 46, and the rotation of the first motor 26 and the rotation of the second motor 27 can be merged.

Specifically, the main transmission path 44 includes a first main gear 51, a second main gear 52, a coupling shaft 53, a third main gear 54, and a fourth main gear 55. The first main gear 51 is connected to the first input shaft 41. The second main gear 52 meshes with the first main gear 51. The coupling shaft 53 is connected to the second main gear 52 and the third main gear 54. The fourth main gear 55 meshes with the third main gear 54. The fourth main gear 55 is connected to the output shaft 43.

The first transmission path 45 includes a first reduction gear 56, a second reduction gear 57, and a first shaft 58. The first reduction gear 56 is connected to the second input shaft 42. The second reduction gear 57 meshes with the first reduction gear 56. The first shaft 58 is connected to the second reduction gear 57. The second transmission path 46 includes a second shaft 59. The second shaft 59 is connected to the second input shaft 42.

The first clutch 47 is connected to the first transmission path 45 and the main transmission path 44. Specifically, the first clutch 47 is connected to the first shaft 58 and the coupling shaft 53. When the first clutch 47 is engaged, the first transmission path 45 is connected to the main transmission path 44. When the first clutch 47 is released, the first transmission path 45 is disconnected from the main transmission path 44.

The second clutch 48 is connected to the second transmission path 46 and the main transmission path 44. Specifically, the second clutch 48 is connected to the second shaft 59 and the first input shaft 41. When the second clutch 48 is engaged, the second transmission path 46 is connected to the main transmission path 44. When the second clutch 48 is released, the second transmission path 46 is disconnected from the main transmission path 44.

The controller 37 switches on/off of the first clutch 47 and the second clutch 48 by controlling hydraulic pressure supplied to the first clutch 47 and the second clutch 48. "On" means a state in which the clutches 47 and 48 are engaged. "Off" means a state in which the clutches 47 and 48 are released. The controller 37 switches the plurality of travel modes by switching on/off of the first clutch 47 and the second clutch 48.

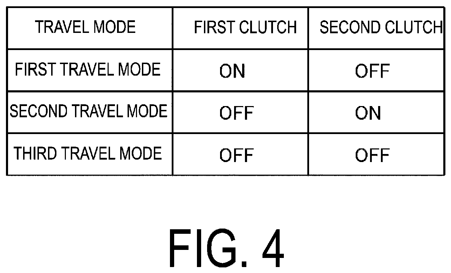

FIG. 4 is a table showing a state of each clutch in the plurality of travel modes. As shown in FIG. 4, the plurality of travel modes include the first travel mode, the second travel mode, and the third travel mode.

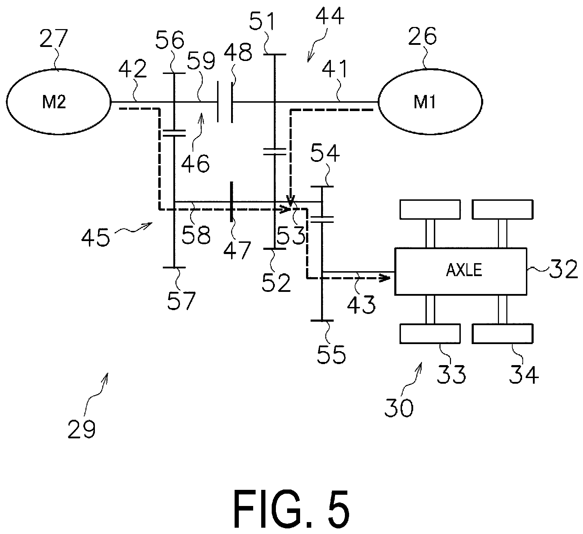

In the first travel mode, the controller 37 engages the first clutch 47 and releases the second clutch 48. By this, as illustrated in FIG. 5, the first transmission path 45 is connected to the main transmission path 44, and the second transmission path 46 is disconnected from the main transmission path 44. By this, the driving force from the second motor 27 is merged to the main transmission path 44 via the first transmission path 45, and is transmitted to the output shaft 43 together with the driving force from the first motor 26.

The first transmission path 45 has the first reduction ratio higher than the second reduction ratio of the second transmission path 46. Therefore, the work machine 1 can obtain high traction force performance in the first travel mode. Note that the controller 37 may control the first motor 26 or the second motor 27 so as to match the rotation speeds of the main transmission path 44 and the first transmission path 45 when engaging the first clutch 47. This suppresses shock due to switching of the clutches.

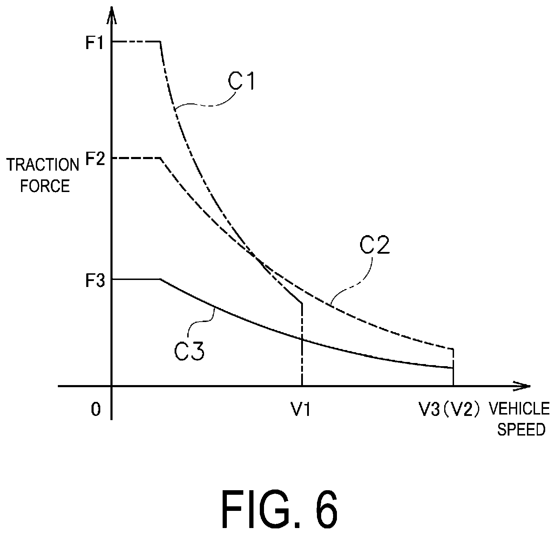

FIG. 6 is a view illustrating traction force characteristics of the work machine 1 in each of the travel modes. The traction force characteristics indicate traction force with respect to the vehicle speed. As illustrated in FIG. 6, a traction force characteristic C1 in the first travel mode obtains a large maximum traction force F1 in the low speed range. For example, the controller 37 selects the first travel mode at the time of work that uses the work implement 3.

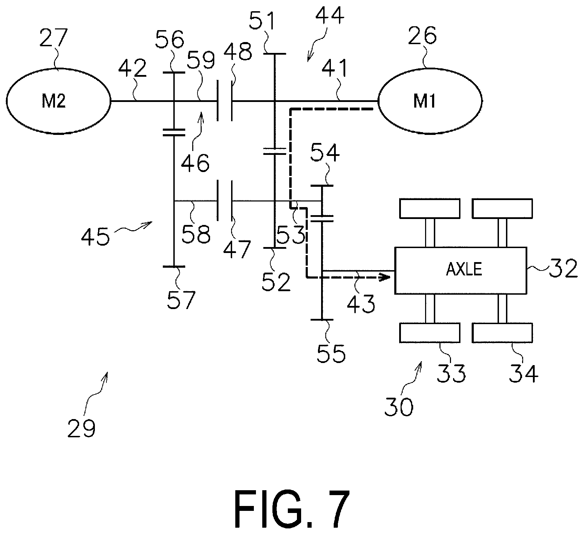

In the third travel mode, the controller 37 releases the first clutch 47 and the second clutch 48. By this, as illustrated in FIG. 7, both the first transmission path 45 and the second transmission path 46 are disconnected from the main transmission path 44. By this, the driving force from the second motor 27 is not transmitted to the output shaft 43, and only the driving force from the first motor 26 is transmitted to the output shaft 43 via the main transmission path 44. As illustrated in FIG. 6, in a traction force characteristic C3 of the third travel mode, a maximum traction force F3 is smaller than the maximum traction force F1 of the first travel mode, but in the traction force characteristic C3 of the third travel mode, a maximum speed V3 higher than a maximum speed V1 of the first travel mode is obtained. The controller 37 selects the third travel mode at the time of low load travel, for example.

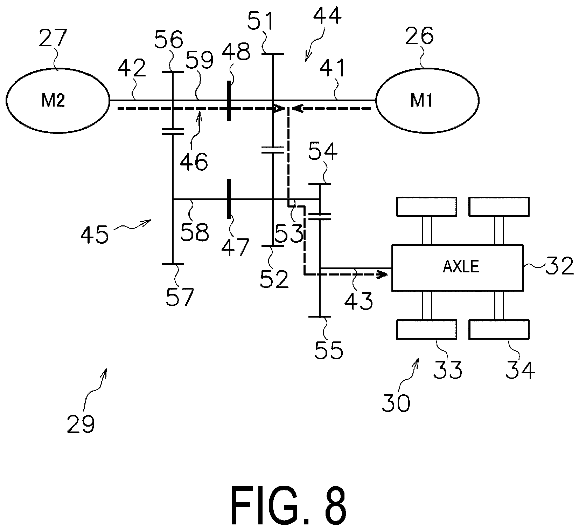

In the second travel mode, the controller 37 engages the second clutch 48 and releases the first clutch 47. By this, as illustrated in FIG. 8, the second transmission path 46 is connected to the main transmission path 44, and the first transmission path 45 is disconnected from the main transmission path 44. By this, the driving force from the second motor 27 is merged to the main transmission path 44 via the second transmission path 46, and is transmitted to the output shaft 43 together with the driving force from the first motor 26. The second transmission path 46 has the second reduction ratio lower than the first reduction ratio of the first transmission path 45. Therefore, even when the work machine 1 travels at a high speed, the rotation speed of the second motor 27 is suppressed from exceeding the permissible rotation speed. Note that the controller 37 may control the first motor 26 or the second motor 27 so as to match the rotation speeds of the main transmission path 44 and the second transmission path 46 when engaging the second clutch 48. This suppresses shock due to switching of the clutches.

As illustrated in FIG. 6, a traction force characteristic C2 of the second travel mode obtains a maximum traction force F2 that is intermediate between the first travel mode and the third travel mode in the low speed range. The traction force characteristic in the second travel mode obtains a high maximum speed V2 equivalent to that in the third travel mode. Therefore, in the second travel mode, both high traction force and high maximum vehicle speed performance are achieved. The controller 37 selects the second travel mode at the time of high load travel, for example. The high load travel means, for example, uphill travel or travel on a bad road.

The controller 37 switches among the first to third travel modes depending on the vehicle speed and/or the load on the work machine 1. For example, the controller 37 selects the first travel mode when the vehicle speed is lower than a predetermined speed threshold. The controller 37 selects the second travel mode or the third travel mode when the vehicle speed is the predetermined speed threshold or more. The speed threshold is set in consideration of the range of the vehicle speed, for example, when the work machine 1 is performing work such as excavation by the work implement 3.

The controller 37 selects the third travel mode when the vehicle speed is the predetermined speed threshold or more and the load on the work machine 1 is lower than a predetermined load threshold. The controller 37 selects the second travel mode when the vehicle speed is the predetermined speed threshold or more and the load on the work machine 1 is the predetermined load threshold or more. The load threshold is set in consideration of a range of the load when, for example, the work machine 1 is traveling on a bad road or an uphill road.

Alternatively, the controller 37 may determine the work phase and switch among the first to third travel modes depending on the work phase. For example, when the work phase is excavation, the controller 37 selects the first travel mode. When the work phase is the low load travel, the controller 37 selects the third travel mode. When the work phase is the high load travel, the controller 37 selects the second travel mode. The controller 37 determines the work phase depending on, for example, the vehicle speed, the load on the work machine 1, and the posture of the work implement 3.

In the work machine 1 according to the present embodiment described above, in the first travel mode, the driving force of the first motor 26 is transmitted to the output shaft 43 via the main transmission path 44, and the driving force of the second motor 27 is transmitted to the output shaft 43 via the first transmission path 45 and the main transmission path 44. Therefore, in the first travel mode, the work machine 1 travels by the first motor 26 and the second motor 27. In the first travel mode, the rotation speed from the second motor 27 is reduced at the first reduction ratio that is higher than the second reduction ratio of the second transmission path 46. This enables the work machine 1 to obtain high traction force performance.

In the second travel mode, the driving force of the first motor 26 is transmitted to the output shaft 43 via the main transmission path 44, and the driving force of the second motor 27 is transmitted to the output shaft 43 via the second transmission path 46 and the main transmission path 44. Therefore, the rotation speed from the second motor 27 is reduced at the second reduction ratio that is lower than the first reduction ratio of the first transmission path 45. Therefore, even when the work machine 1 travels at a high speed, the rotation speed of the second motor 27 is suppressed from exceeding the permissible rotation speed.

For example, even if the permissible rotation speeds of the first motor 26 and the second motor 27 are the same, it is possible to suppress the rotation speed of the second motor 27 from exceeding the permissible rotation speed. Also in the second travel mode, the work machine 1 travels by the first motor 26 and the second motor 27. Therefore, high traction force performance can be obtained even at the time of high speed travel. As described above, in the work machine 1 according to the present embodiment, both high traction force and high maximum vehicle speed performance are achieved.

Although one embodiment of the present invention has been described above, the present invention is not limited to the above-described embodiment, and various modifications can be made without departing from the gist of the invention.

The work machine 1 is not limited to a wheel loader and may be another machine such as a bulldozer or a motor grader. The work machine 1 may be remotely operable. In that case, the accelerator operation member 38 and the work implement operation member 39 may be arranged outside the work machine 1. The controller 37 may include a plurality of controllers. The processing for controlling the work machine 1 described above may be distributed to and executed by the plurality of controllers.

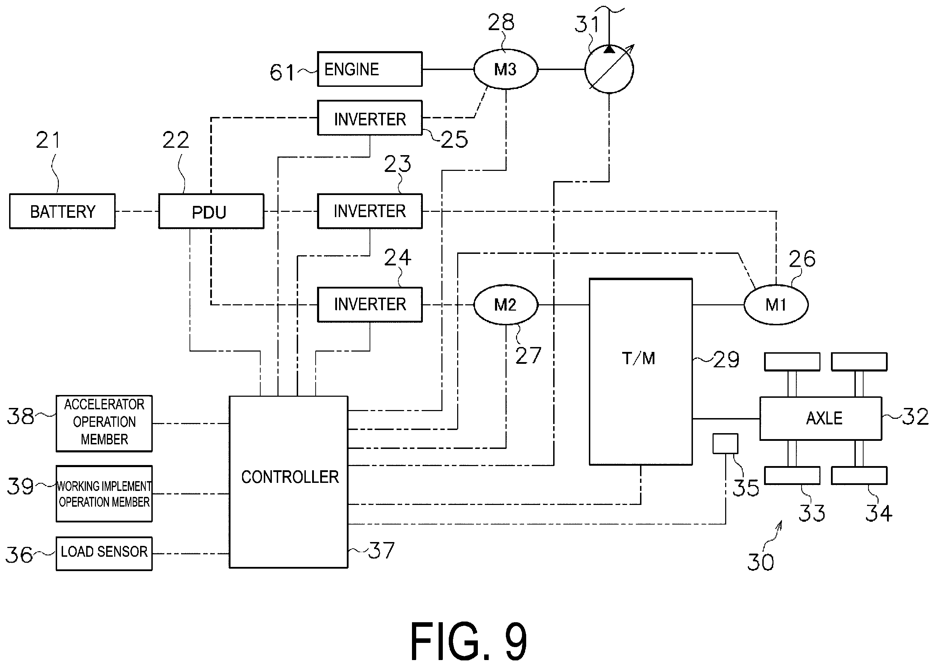

FIG. 9 is a view illustrating a configuration of a work machine 1 according to the first modification. As illustrated in FIG. 9, the work machine 1 may include an engine 61. The first to third motors 26 to 28 may be driven by electricity generated by driving force by the engine 61. For example, the battery 21 may be charged with electric power generated by the third motor 28 being driven by the engine 61.

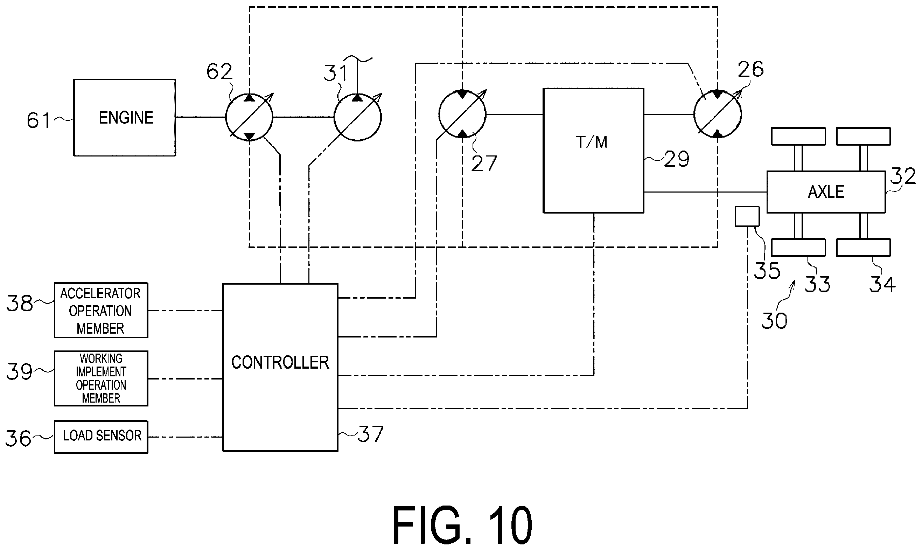

FIG. 10 is a view illustrating a configuration of a work machine 1 according to the second modification. As illustrated in FIG. 10, the work machine 1 may include the engine 61 and a travel pump 62. The first motor 26 and the second motor 27 may be hydraulic motors. The travel pump 62 may discharge hydraulic oil by being driven by the engine 61. The first motor 26 and the second motor 27 may be driven by hydraulic oil from the travel pump 62.

### Industrial Applicability

According to the present disclosure, the work machine can generate high traction force at the time of high speed travel.

### Reference Signs List

26: First motor
27: Second motor
29: Transmission
30: Travel body
37: Controller
43: Output shaft
44: Main transmission path
45: First transmission path
46: Second transmission path
47: First clutch
48: Second clutch

## Claims

1. A work machine comprising:
a first motor;
a second motor;
a travel body that causes the work machine to travel;
a transmission including an output shaft connected to the travel body, a main transmission path connecting the first motor to the output shaft, a first transmission path connected to the second motor and having a first reduction ratio, a second transmission path connected to the second motor and having a second reduction ratio lower than the first reduction ratio, a first clutch connected to the first transmission path and the main transmission path, and a second clutch connected to the second transmission path and the main transmission circuit; and
a controller that switches a plurality of travel modes including a first travel mode in which driving force of the second motor is transmitted to the main transmission path via the first transmission path by engaging the first clutch and releasing the second clutch and a second travel mode in which driving force of the second motor is transmitted to the main transmission path via the second transmission path by engaging the second clutch and releasing the first clutch.

2. The work machine according to claim 1, wherein
the controller
detects vehicle speed, and
switches between the first travel mode and the second travel mode depending on the vehicle speed.

3. The work machine according to claim 1, wherein
the controller
detects load on the work machine, and
switches between the first travel mode and the second travel mode depending on the load.

4. The work machine according to claim 1, wherein
the controller
determines a work phase of the work machine, and
switches between the first travel mode and the second travel mode depending on the work phase.

5. The work machine according to claim 1, wherein
the plurality of travel modes include a third travel mode in which the second motor is disconnected from the main transmission path by releasing the first clutch and the second clutch.

6. The work machine according to claim 1, wherein
the controller
detects load on the work machine, and
switches between the second travel mode and the third travel mode depending on the load.
